# EUROPEAN PATENT SPECIFICATION

(11) **EP 3 396 594 B1**
(45) Date of publication and mention of the grant of the patent: **07.04.2021**
(21) Application number: 18170053.5
(22) Date of filing: 30.04.2018
(51) Int. Cl.: G06K 9/20, G06K 9/46, G06T 7/73

(54) **TRACKING SYSTEM AND METHOD THEREOF**
VERFOLGUNGSSYSTEM UND VERFAHREN DAFÜR
SYSTÈME DE SUIVI ET PROCÉDÉ ASSOCIÉ

(30) Priority: 28.04.2017 US 201762491269 P
(43) Date of publication of application: 31.10.2018
(73) Proprietor: HTC Corporation, Taoyuan City 330, (TW)
(72) Inventor: Chen, Yuan-Tung, Taoyuan City 330 (TW); Yeh, Shing-Chiao, Taoyuan City 330 (TW); Wu, Po-I, Taoyuan City 330 (TW); Ding, Heng, Taoyuan City 330 (TW); Tsai, Kun-Chun, Taoyuan City 330 (TW)
(74) Representative: Murgitroyd & Company

(56) References cited:
- US-B1- 8 531 519
- GUO CHAO X ET AL: "Large-scale cooperative 3D visual-inertial mapping in a Manhattan world", 2016 IEEE INTERNATIONAL CONFERENCE ON ROBOTICS AND AUTOMATION (ICRA), IEEE, 16 May 2016 (2016-05-16), pages 1071-1078, XP032908308, DOI: 10.1109/ICRA.2016.7487238 [retrieved on 2016-06-08]
- GUERRA E ET AL: "Collaborative localization for autonomous robots in structured environments", 2016 IEEE 14TH INTERNATIONAL CONFERENCE ON INDUSTRIAL INFORMATICS (INDIN), IEEE, 19 July 2016 (2016-07-19), pages 219-224, XP033043909, DOI: 10.1109/INDIN.2016.7819162 [retrieved on 2017-01-13]
- JARAMILLO CARLOS ET AL: "6-DoF pose localization in 3D point-cloud dense maps using a monocular camera", 2013 IEEE INTERNATIONAL CONFERENCE ON ROBOTICS AND BIOMIMETICS (ROBIO), IEEE, 12 December 2013 (2013-12-12), pages 1747-1752, XP032579621, DOI: 10.1109/ROBIO.2013.6739720 [retrieved on 2014-02-12]

## Description

### BACKGROUND

### FIELD OF INVENTION

The disclosure relates to a tracking system and a method thereof. More particularly, the disclosure relates to how to locate a device by means of another powerful device with a map and refine the map in the tracking system.

### DESCRIPTION OF RELATED ART

Simultaneous Localization and Mapping (SLAM) technology is utilized by an electronic device to construct the map of an unknown environment (e.g., the physical environment) while simultaneously track its own position by means of the constructed map within the unknown environment. However, the electronic device needs a lot of computation resources to implement the SLAM technology. Thus, if the electronic device has not enough computation resources, it will not be able to utilize the SLAM technology to track its own position.

US 8,531,519 B1 (Yifan Peng [JP] et al) 6 September 2012; E. Guerra, R. Munguia, Y. Bolea and A. Grau, "Collaborative localization for autonomous robots in structured environments," 2016 IEEE 14th International Conference on Industrial Informatics (INDIN), Poitiers, 2016, pp. 219-224, doi: 10.1109/INDIN.2016.7819162; and C. Jaramillo, I. Dryanovski, R. G. Valenti and J. Xiao, "6-DoF pose localization in 3D point-cloud dense maps using a monocular camera," 2013 IEEE International Conference on Robotics and Biomimetics (ROBIO), Shenzhen, 2013, pp. 1747-1752, doi: 10.1109/ROBIO.2013.6739720; can be regarded as background art useful for understanding the disclosure.

### SUMMARY

It is an object of an embodiment of the present invention to provide a tracking system, comprising:a first electronic device (110) located in a unknown physical environment, the first electronic device (110) being an head mounted device and comprising:- a first camera unit (111) configured for capturing a plurality of first images of the unknown physical environment;- characterized by a first processor (112), coupled to the first camera unit (111) and configured for extracting a plurality of first feature points from the first images, generating a plurality of map points according to the extracted first feature points, building a three-dimensional, 3D, map of the unknown physical environment according to the map points, and obtaining the distances (d1, d2, d3, d4, d5) between the first camera unit (111) and the plurality of first feature points of the plurality of map points by a depth camera included in the first camera unit (111), or calculating the distances (d1, d2, d3, d4, d5) between the first camera unit (111) and the plurality of first feature points of the plurality of map points by disparity based on displacement of the first camera unit (111) at different time points, the distances (d1, d2, d3, d4, d5) being calculated by the disparity between two images each captured by the camera unit (111) of two objects, the first image of the two images captured at a time point, and the second image of the two images captured at another later time point when the camera unit (111) is displaced to another position; and- a first communication unit (113) coupled to the first processor (112); anda second electronic device (120) located in the unknown physical environment, the second electronic device (120) being a controller, a smart phone, or a head mounted device, and comprising:-a second camera unit (121) configured for capturing a second image of the unknown physical environment;- a second processor (122) coupled to the second camera unit (121) and configured for extracting a plurality of second feature points from the second image; wherein the second processor (122) of the second electronic device (120) being equipped with less computation resource than the first processor (112) of the electronic device (110);- a second communication unit (123) coupled to the second processor (122) and configured for transmitting the second feature points to the first electronic device (110); wherein the first communication unit (113) is configured for receiving the second feature points, and the first processor (112) is further configured for estimating a pose of the second electronic device (120) according to the 3D map and the received second feature points; wherein the pose of the second electronic device (120) comprises at least one of a position of the second electronic device (120) in the 3D map and an orientation of the second electronic device (120) in the 3D map.

**The** disclosure also provides a tracking method. The tracking method, comprising: capturing a plurality of first images of a unknown physical environment by a first electronic device (110), the first electronic device (110) being a head mounted device; characterized by extracting a plurality of first feature points from the first images, generating a plurality of map points according to the extracted first feature points, building a three-dimensional, 3D, map of the unknown physical environment according to the map points by the first electronic device (110), and obtaining the distances (d1, d2, d3, d4, d5) between the first camera unit (111) and the plurality of first feature points of the plurality of map points by a depth camera included in the first camera unit (111), or calculating the distances (d1, d2, d3, d4, d5) between the first camera unit (111) and the plurality of first feature points of the plurality of map points by disparity based on displacement of the first camera unit (111) at different time points, the distances (d1, d2, d3, d4, d5) being calculated by the disparity between two images each captured by the camera unit (111) of two objects, the first image of the two images captured at a time point, and the second image of the two images captured at another later time point when the camera unit (111) is displaced to another position;capturing a second image of the physical environment by a second electronic device (120), the second electronic device (120) being a controller, a smart phone, or a head mounted device;extracting a plurality of second feature points from the second image and transmitting the second feature points to the first electronic device (110) by the second electronic device (120); wherein the second processor (122) of the second electronic device (120) being equipped with less computation resource than the first processor (112) of the electronic device (110);receiving the second feature points and estimating a pose of the second electronic device (120) according to the 3D map and the received second feature points by the first electronic device; and wherein the pose of the second electronic device (120) comprises at least one of a position of the second electronic device in the 3D map and an orientation of the second electronic device (120) in the 3D map.

Based on aforesaid embodiments, the first electronic device in the tracking system is capable of calculating a position of the second electronic device, establishing a three-dimensional map according to the first feature points collected by the first electronic device and the second feature points collected by the second electronic device. In some embodiments, the second electronic device is configured to collect the second feature points in the physical environment, and the second electronic device is able to provide the second feature points to refine the three-dimensional map established by the first electronic device. The second electronic device can locate its position according to the three-dimensional map established by the first electronic device. Therefore, the second electronic device is not necessary to have a powerful computation resource to establish the three-dimensional map by itself. Therefore, the tracking system allows a device with poor computation resource locating its position using the SLAM technology.

It is to be understood that both the foregoing general description and the following detailed description are by examples, and are intended to provide further explanation of the invention as claimed.

### BRIEF DESCRIPTION OF THE DRAWINGS

The disclosure can be more fully understood by reading the following detailed description of the exemplary embodiments, with reference made to the accompanying drawings as follows:
FIG. 1 is a functional block diagram illustrating a tracking system according to an embodiment of this disclosure.
FIG. 2 is a flow diagram illustrating a tracking method according to an embodiment of this disclosure.
FIG. 3 is a schematic diagram illustrating views of the electronic devices in the physical environment.
FIG. 4A is a schematic diagram illustrating the feature points of the images.
FIG. 4B is a schematic diagram illustrating the map points in the three-dimensional map.
FIG. 5A is a schematic diagram illustrating the feature points of the images.
FIG. 5B is a schematic diagram illustrating the mapping relationship between the feature points and the map points.
FIG. 5C is a schematic diagram illustrating the map points in the three-dimensional map.
FIG. 6A is a flow diagram illustrating a tracking method according to an embodiment of this disclosure.
FIG. 6B is a partial flow diagram of the FIG. 6A according to another embodiment of this disclosure.
FIG. 7A is a schematic diagram illustrating the feature points of the images.
FIG. 7B is a schematic diagram illustrating the mapping relationship between the feature points and the map points.
FIG. 7C is a schematic diagram illustrating the map points in the three-dimensional map.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

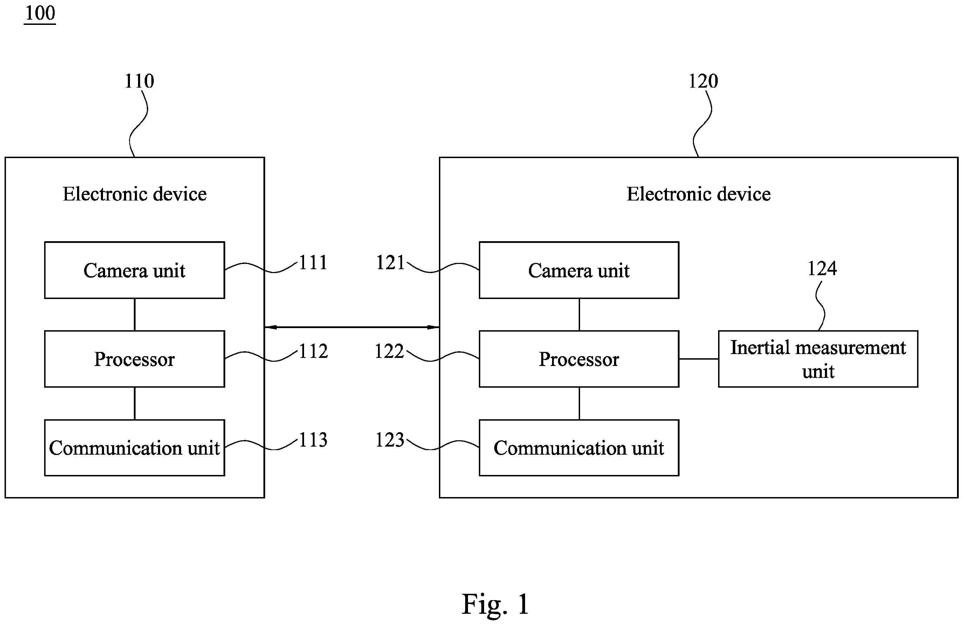

Reference is made to FIG. 1, which is a functional block diagram illustrating a tracking system 100 according to an embodiment of this disclosure. As shown in FIG. 1, the tracking system 100 includes electronic devices 110 and 120. The electronic devices 110 and 120 are located in a physical environment. In some embodiments, the electronic device 110 can be implemented by a head-mounted device (HMD). The electronic device 120 can be implemented by a controller device, a smart phone or a head-mounted device communicated with the electronic device 110. In some embodiments, the electronic device 120 may be equipped with less computation resource (e.g., a processing unit with a lower operation frequency limited memory, etc.) than the electronic device 110.

The electronic device 110 includes a camera unit 111, a processor 112 and a communication unit 113. The processor 112 is electrically connected to the camera unit 111 and the communication unit 113. The electronic device 120 includes a camera unit 121, a processor 122, a communication unit 123 and an inertial measurement unit (IMU) 124. The processor 122 is electrically connected to the camera unit 121, the communication unit 123 and the IMU 124. The processor 112 and 122 can be implemented by a graphics processor, a central processing unit (CPU), a control circuit and/or a graphics processing unit. In some embodiments, the camera unit 111 can include one camera component located at the front side of the head-mounted device, and the camera unit 121 can include one camera component located on the controller device, the smart phone or the head-mounted device. In some embodiments, the camera units 111 and 121 can include a dual camera module and/or a depth camera. In some embodiments, the communication units 113 and 123 can include a WiFi transceiver, a WiFi-Direct transceiver, a Bluetooth transceiver, a BLE transceiver, a Zigbee transceiver and/or any applicable wireless communication transceiver.

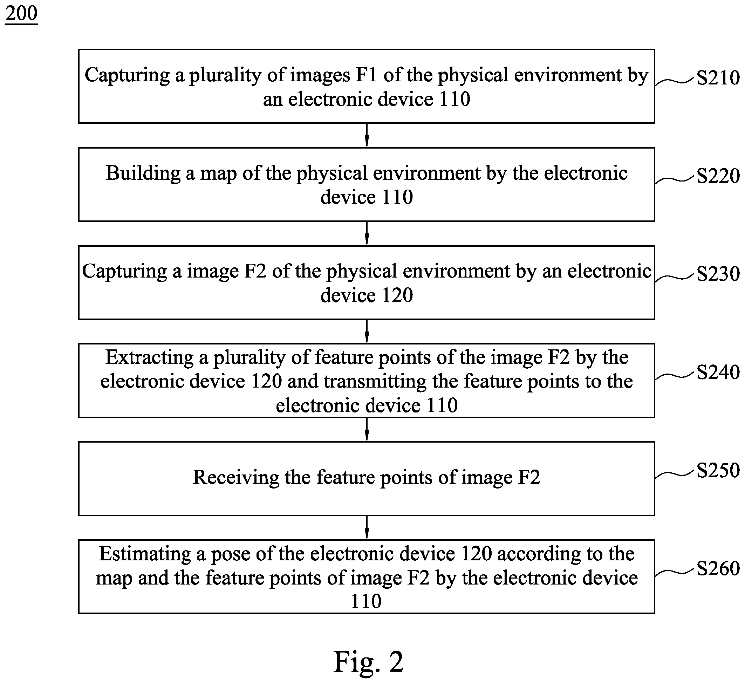

Reference is made to FIG. 2, which is a flow diagram illustrating a tracking method 200 according to an embodiment of this disclosure. In the embodiment, the tracking method 200 can be utilized to build a three dimensional map of the physical environment, and calculate or estimate the pose of the electronic devices 110 and 120. In this disclosure, the poses of the electronic devices 110 and 120 comprise the positions of the electronic devices 110 and 120 or the orientations of the electronic devices 110 and 120 or both.

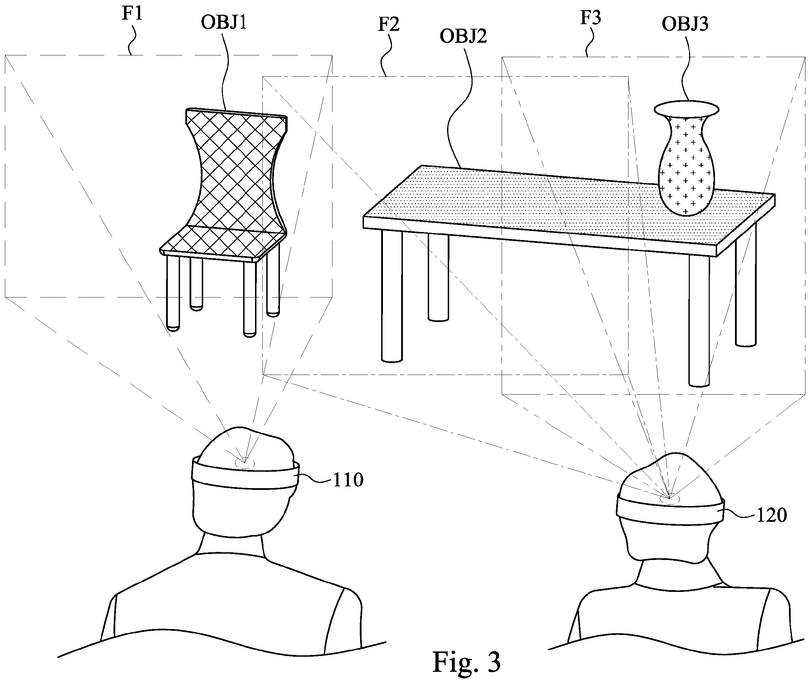

Reference is made to FIG. 1 and FIG. 2. As the embodiment shown in FIG. 2, the tracking method 200 firstly executes step S210 to capture a plurality of images F1 of the physical environment over time by the electronic device 110. Reference is made to FIG. 3, which is a schematic diagram illustrating views of the electronic devices 110 and 120 in the physical environment. As the example shown in FIG. 3, the camera unit 111 of the electronic device 110 is configured to capture images F1 of the physical environment over time. The images F1 can be captured from different camera poses, and only one image is shown in Fig. 3 for simplicity.

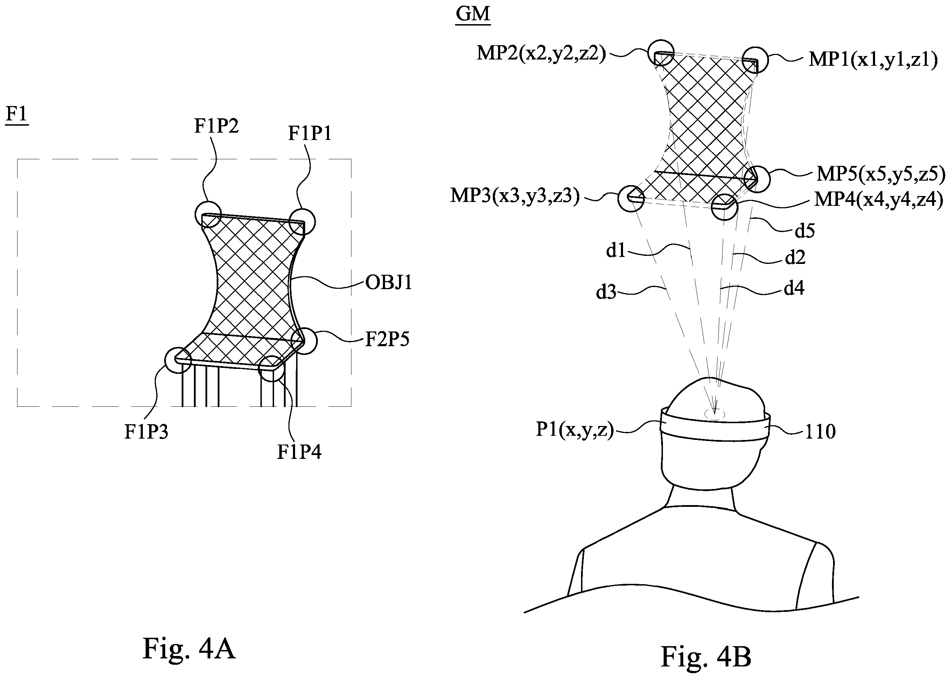

Afterward, the tracking method 200 executes step S220 to build a three-dimensional map of the physical environment by the electronic device 110. Before building the three-dimensional map, the processor 112 is configured to extract the feature points from the images F1. Reference is made to FIG. 4A, which is a schematic diagram illustrating the feature points of the images F1 (only one image is shown therein for simplicity). In aforesaid embodiment, the processor 112 is configured to extract the feature points F1P1, F1P2, F1P3, F1P4 and F1P5 of the object OBJ1 according to the images F1 captured by the camera unit 111. The feature points F1P1, F1P2, F1P3, F1P4 and F1P5 include descriptors and two dimensional (2D) coordinates of the feature points F1P1, F1P2, F1P3, F1P4 and F1P5 within the image F1. In general, the descriptor of a feature point may indicate features such as a corner, a blob, an edge, a line, a texture, a color, etc. In the embodiment, if the object OBJ1 has a net texture with green color, the feature points F1P1, F1P2, F1P3, F1P4 and F1P5 extracted from the image F1 also have the descriptors of the net texture and green color. In another embodiment, the feature points are also called landmarks.

Reference is made to FIG. 4B, which is a schematic diagram illustrating the map points in the three-dimensional map GM. In aforesaid embodiment, the feature points F1P1, F1P2, F1P3, F1P4 and F1P5 are extracted by the processor 112, and the processor 112 is configured to create the map points MP1, MP2, MP3, MP4 and MP5 according to the feature points F1P1, F1P2, F1P3, F1P4 and F1P5 and add the map points MP1, MP2, MP3, MP4 and MP5 to the three-dimensional map GM. In some embodiments, the map points MP1, MP2, MP3, MP4 and MP5 have data of the feature points F1P1, F1P2, F1P3, F1P4 and F1P5 (e.g. descriptors and 2D coordinates) and three dimensional (3D) coordinates. Here the descriptor of the feature point is also a descriptor of the corresponding map point indicating the feature(s) thereof. As shown in Fig. 4B, the 3D coordinates of the electronic device 110 is represented as P1(x, y, z), which at a certain time point (e.g. when the electronic device 110 powers on) can be set as an origin (0, 0, 0) of a coordinate system of the three-dimensional map (i.e. x=y=z=0). Relative to the origin, the coordinates of the map point MP1 are (x1, y1, z1), the coordinates of the map point MP2 are (x2, y2, z2), the coordinates of the map point MP3 are (x3, y3, z3), the coordinates of the map point MP4 are (x4, y4, z4), and the coordinates of the map point MP5 are (x5, y5, z5). Take the map point MP1 for example to describe how to determine its coordinates (x1,y1,z1). It is assumed that the image F1 is captured when the electronic device 110 is at the origin. The values of x1 and y1 can be generated according to the 2D coordinates of the feature point F1P1. Details of the generation method are well-known and will not be described here. Further, the value of z1 can be derived from the distance d1 between the map point MP1 and the electronic device 110, for example z1 may be equal to d1. This is how the values of x1, y1 and z1 are determined. In similar manner, the 3D coordinates of the map points MP2, MP3, MP4 and MP5 can also be determined. In an embodiment, the distances d1, d2, d3, d4 and d5 may be obtained via a depth camera included in the camera unit 111 (not shown in figures). For example, when the camera unit 111 captures the image F1, the depth camera can simultaneously capture an image for providing depth information of the feature points F1P1-F1P5, which can then be used to estimate the distances d1-d5. In another embodiment, the distances d1, d2, d3, d4 and d5 may be calculated by the disparity. In this case, the disparity can be calculated based on displacement (e.g. the horizontal displacement) of the camera unit 111 in different time points. For example, in a time point, the camera unit 111 captures an image of X object and Y object, and in another time point, the camera unit 111 moves to another position (e.g. horizontal movement) and captures another image of X object and Y object again. There is a first difference between two images of X object and a second difference between two images of Y object. If X object is closer to the camera unit 111 than Y object, then the first difference is larger than the second difference. Therefore, the distance between the camera unit 111 and X object and the distance between the camera unit 111 and Y object can be calculated. Thus, if X object comprises F1P1 and Y object comprises F1P2, the distances d1 and d2 can be calculated. The distances d3, d4 and d5 can also be calculated in such manner. In some embodiments, if the image F1 is captured when the electronic device 110 is at another pose (i.e. another position and/or orientation) rather than the origin, then the 3D coordinates determined in above ways (i.e. depth camera or disparity) should be transformed so that they can be used as the 3D coordinates of the map points. This transformation reflects the movement from the origin to another pose, and will not be detailed here since it is a well-known technique.

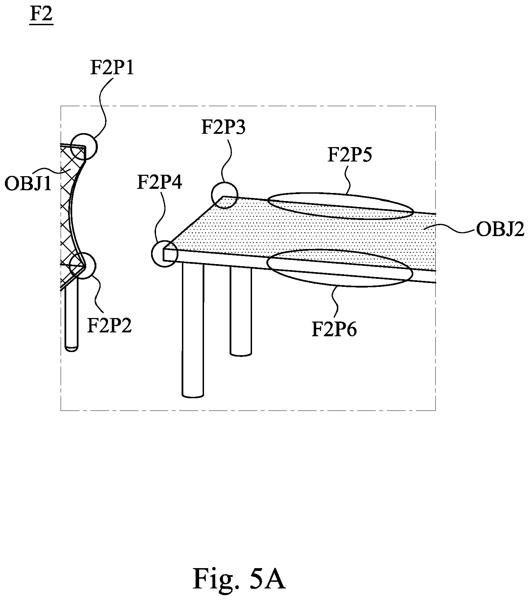

Afterward, the tracking method 200 executes step S230 and S240 to capture an image F2 of the physical environment by the electronic device 120, extract a plurality of feature points of the image F2 by the electronic device 120 and transmit the extracted feature points to the electronic device 110. Reference is made to FIG. 5A, which is a schematic diagram illustrating the feature points of the image F2. As shown in FIG. 5A, the processor 122 is configured to extract the feature points F2P1 and F2P2 of the object OBJ1 and the feature points F2P3, F2P4, F2P5 and F2P6 of the object OBJ2 according to the image F2 captured by the camera unit 121. The communication unit 123 is configured to transmit the feature points F2P1, F2P2, F2P3, F2P4, F2P5 and F2P6 to the communication unit 113.

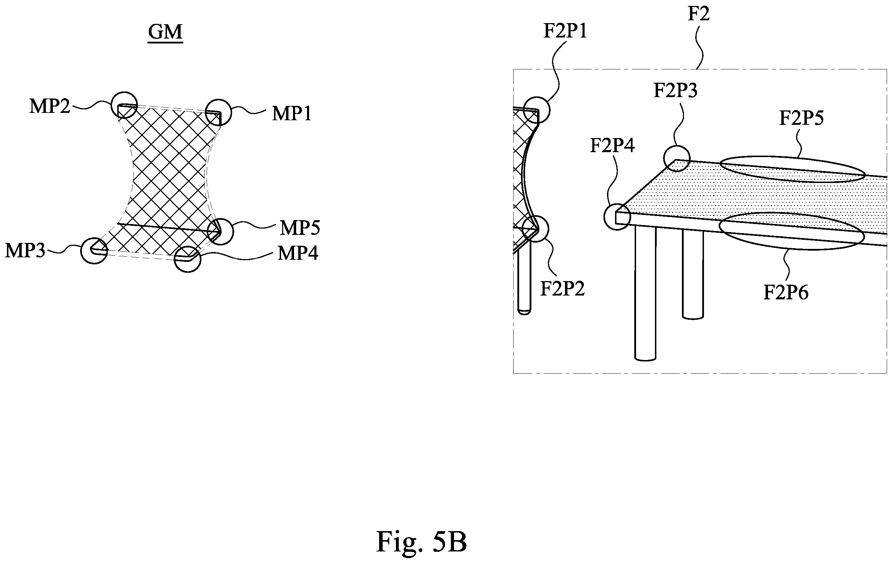

Afterward, the tracking method 200 executes step S250 to receive the feature points of image F2 by the communication unit 113 and step S260 to estimate a pose (i.e. position and/or orientation) of the electronic device 120 according to the three-dimensional map and the feature points of image F2 by the processor 112. Reference is made to FIG. 5B, which is a schematic diagram illustrating the mapping relationship between the feature points and the map points. In one embodiment, when estimating the pose of the electronic device 120, the processor 112 first compare the received feature points F2P1, F2P2, F2P3, F2P4, F2P5, and F2P6 of the image F2 with the map points MP1, MP2, MP3, MP4, and MP5 in the map three-dimensional GM to determine if there is a match. Then, based on the comparison result, the processor 112 performs a tracking algorithm to estimate the pose of the electronic device 120. Here the tracking algorithm is any applicable tracking algorithm which tracks the pose of an object by using the matched map points similar as mentioned below. As shown in FIG. 5B, the descriptors of the feature points F2P1 and F2P2 are a net texture with green color and corner, the descriptors of the feature points F2P3 and F2P4 are a dot texture with brown and corner, the descriptors of the feature points F2P5 and F2P6 are a dot texture with brown and line. The feature point F2P1 and the map point MP1 have the similar descriptors (i.e. net texture and corner). Therefore, the processor 112 would determine that the feature point F2P1 matches the map point MP1. For similar reason, the processor 112 would determine that the feature point F2P2 matches the map point MP5, because there are similar descriptors.

In one embodiment, when the processor 112 matches the portion of the feature points F2P1 and F2P2 to the map points MP1 and MP5, the portion of the feature points F2P1 and F2P2 are added to the map points MP1 and MP5 for updating or refining the three-dimensional map. In general, the three-dimensional map GM will be updated continuously by the matching feature points extracted from the images captured by both the camera units 111 and 121.

In an embodiment, the map point MP1 includes two descriptors along with two timestamps. One of the descriptors is obtained along from the feature point F1P1 with a first timestamp (e.g., 2018041903040018) corresponding to the image F1. The other of the descriptors is obtained from the feature point F2P1 with a second timestamp (e.g., 2018041903040023) corresponding to the image F2. The first timestamp and the second timestamp are generated according to the time points when the images of F1P1 and F2P1 are captured, respectively. When there are more feature points from different images matching to the same map point, the descriptors of the map point in the three-dimensional map will be more precise and close to a current status of the physical environment. For example, the descriptor of the feature point F2P1 may contain different feature(s) or even more features than that of the feature point F1P1, which reflects different statuses of the corresponding map point at different timestamps.

In another embodiment, the map point MP1 includes a specific amount of descriptors (e.g., N descriptors) along with latest N timestamps. In this case, when there are more than N descriptors matching to the same map point, the latest descriptor will replace the oldest descriptor under the same map point.

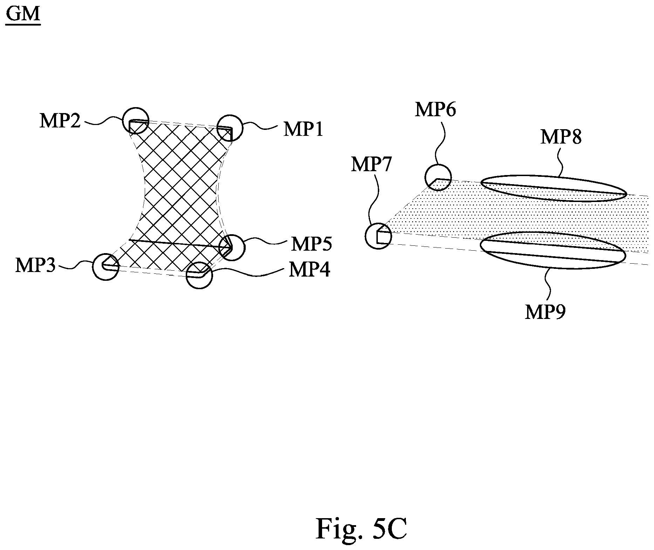

In one embodiment, though the feature points F2P3, F2P4, F2P5 and F2P6 do not match to any map point, they can still be converted into the map points MP6, MP7, MP8, and MP9 as shown in FIG. 5C. The conversion method is similar to aforesaid embodiment shown in FIG. 4B. For example, if the camera unit 121 of the electronic device 120 comprises a depth camera, then the electronic device 120 can transmit to the electronic device 110 the feature points F2P3-F2P6 of the image F2 along with their depth information, which can be used to determine the distances between the feature points F2P3-F2P6 and the electronic device 120. Then the feature points F2P3-F2P6 can be converted into map points MP6-MP9 according to the determined distances, the 2D coordinates of the feature points F2P3-F2P6 and the corresponding pose of the electronic device 120 estimated in step S260. In another example, the feature points F2P3-F2P6 (including descriptors, 2D coordinates, timestamps, etc.) can be stored along with the corresponding pose of the electronic device 120 estimated in step S260 into the three-dimensional map GM, and wait to be converted into the map points MP6-MP9 later. More specifically, if later on the electronic device 110 obtains a feature point F4P1 in an image F4 (not shown in figures) matching one of the feature points (e.g. F2P3) and the corresponding pose of the electronic device 110 or 120 (depending on which device capturing the image F4), then the feature points F2P3 can be converted into the map point MP6 according to the feature points F2P3 and F4P1 and their corresponding poses. The conversion method is well known and will not be detailed here.

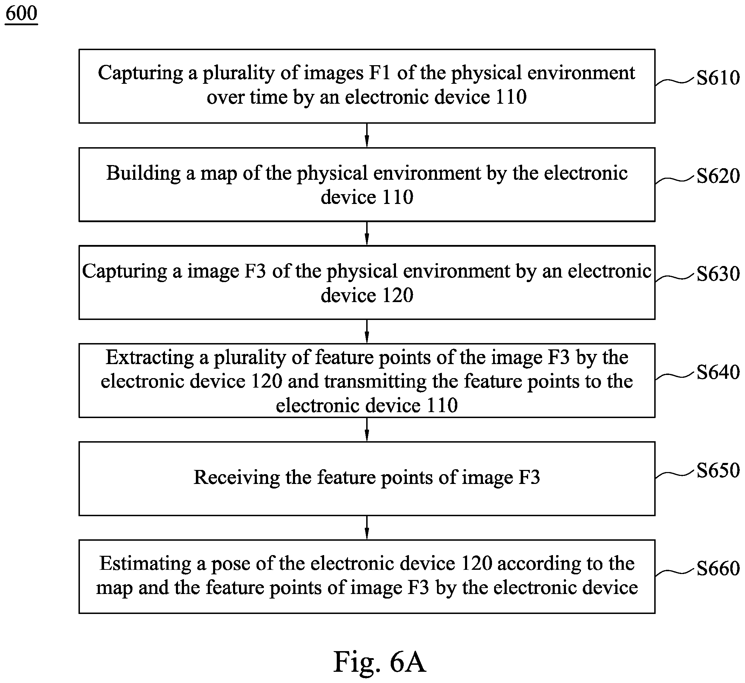

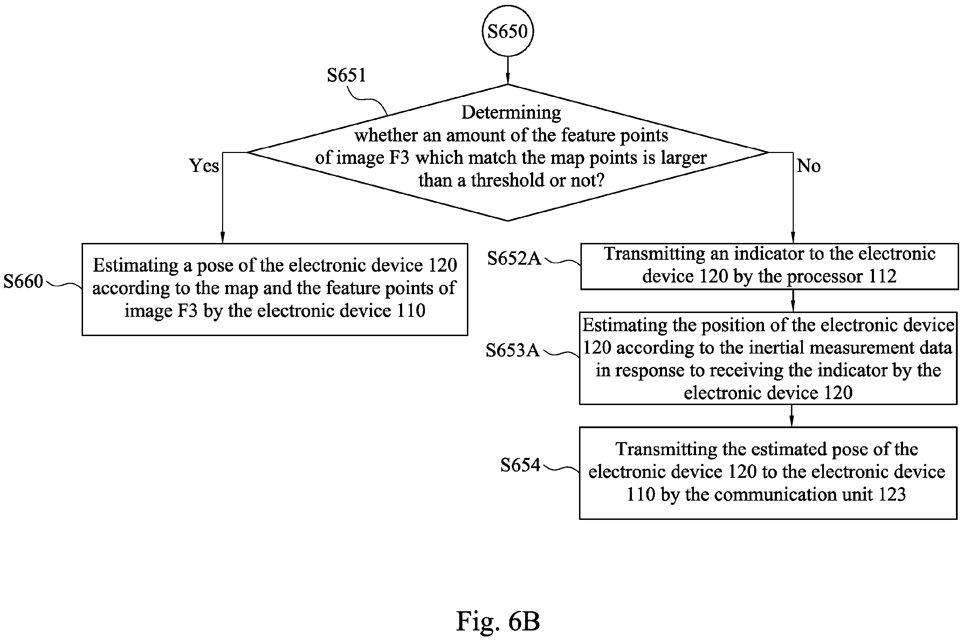

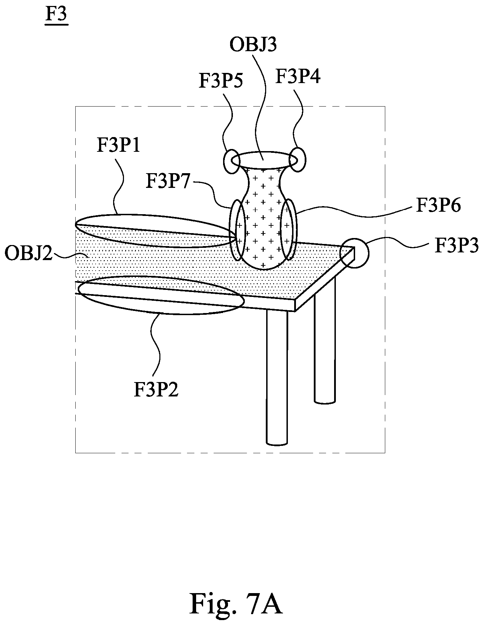

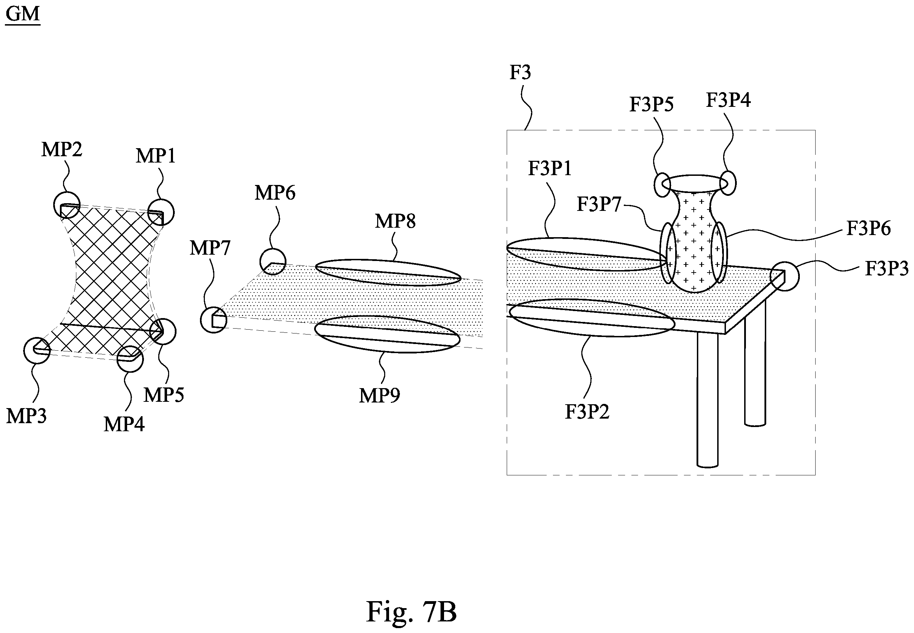

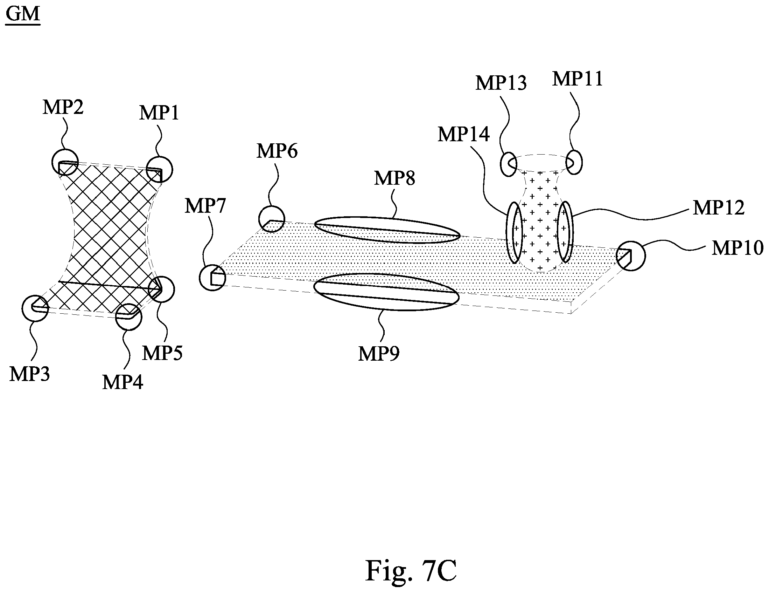

Now reference is made to FIG. 6A to 6B. FIG. 6A is a flow diagram illustrating a tracking method according to an embodiment of this disclosure. FIG. 6B is a partial flow diagram of the FIG. 6A according to another embodiment of this disclosure. As shown in FIG. 6A, the steps S610 to S650 are similar to the steps S210 to S250. The difference is the image captured by the camera unit 121. Reference is made to FIG. 7A to 7C. FIG. 7A is a schematic diagram illustrating the feature points of the image F3. FIG. 7B is a schematic diagram illustrating the mapping relationship between the feature points and the map points. FIG. 7C is a schematic diagram illustrating the map points in the three-dimensional map GM.

When the camera unit 121 captures the image F3 and transmits to the processor 122, the processor 122 is configured to extract the feature points F3P1, F3P2 and F3P3 of the object OBJ2 and the feature points F3P4, F3P5, F3P6 and F3P7 of the object OBJ3 according to the image F3. The communication unit 123 is configured to transmit the feature points F3P1, F3P2, F3P3, F3P4, F3P5, F3P6 and F3P7 to the communication unit 113.

Based on aforesaid embodiment, the processor 112 is configured to determine whether the feature points F3P1, F3P2, F3P3, F3P4, F3P5, F3P6, and F3P7 match any of the map points MP1-MP9. As shown in FIG. 7B, the descriptors of the feature points F3P1 and F3P2 are a dot texture with brown color and line, the descriptors of the feature points F3P3 is a dot texture with brown color and corner, the descriptors of the feature points F3P4 and F3P5 are a plus (i.e. "+") texture with blue color and corner, and the descriptors of the feature points F3P6 and F3P7 are a plus texture with blue color and edge. Therefore, the feature point F3P1 is determined to be matching the map point MP8, and the feature point F3P2 is determined to be matching to the map point MP9.

The tracking method 600 further executes step S651 to determine whether an amount of the feature points of the image F3 which match the map points is larger than a threshold or not. In one embodiment, as shown in FIG. 7B, the when the processor 112 matches the feature points F3P1 and F3P2 to the map points MP8 and MP9, the portion of the feature points F3P1 and F3P2 are added to the map points MP8 and MP9 for refining the map (e.g. adding the new descriptor and timestamp about the map points MP8 and MP9). In step S651, the processor 112 calculates the amount of the feature points of the image F3 which match the map points. In FIG. 7B, the amount of the feature points F3P1 and F3P2 of the image F3 which match the map points is two (i.e. F3P1 and F3P2). If the threshold is one, i.e. smaller than the amount of the matching feature points, then the processor 112 further executes step S660 to estimate the pose of the electronic device 120 according to the matched map points (i.e. MP8 and MP9). The value of threshold depends on the tracking algorithm used, and this disclosure is not limited to any specific tracking algorithm. Thus, here the threshold of one is just an example and the scope of this disclosure should not be limited thereto.

Afterward, if the threshold (number of the feature points of image which match the map points) is four, the amount of the feature points of image F3 which match the map points is not larger than the threshold. Thus, the electronic device 110 further executes step S652A to transmit an indicator to the electronic device 120, which executes step S653A to estimate its own pose according to inertial measurement data in response to receiving the indicator from the electronic device 110. The indicator indicates a failure to estimate the pose of the electronic device 120, when the amount of the feature points of the image F3 which match the map points is not larger than the threshold. The indicator is used to tell the electronic device 120 to estimate its own pose by itself. Therefore, the processor 122 is configured to estimate the pose of the electronic device 120 according to the inertial measurement data. The inertial measurement data is generated by the IMU 124. The IMU 124 can provide further gesture or motion data of the electronic device 120, and the processor 122 can estimate the pose according to the data of the IMU 124. Thus, the electronic device 120 can still track its own pose even without the help of the more powerful electronic device 110.

Afterward, the tracking method 600 further executes step S654 to transmit the estimated pose of the electronic device 120 to the electronic device 110 by the communication unit 123. Thus, the electronic device 110 can still track the pose of the electronic device 120 when it fails to do the tracking by means of the feature points sent from the electronic device 120. The case of no enough matching feature points may occur when the quality of the image F3 is not good enough due to, for example, fast movement of the electronic device 120. Though there may be limited accuracy to estimate the pose only by means of the IMU data, it can prevent the electronic device 120 from losing tracking, especially when the problem of image quality is temporary.

In one embodiment, as shown in FIG. 7B, though the feature points F3P3, F3P4, F3P5, F3P6 and F3P7 fail in matching any of the map points MP1-MP9, they can still be converted into the map points MP10, MP11, MP12, MP13, and MP14 as shown in FIG. 7C. The conversion method is similar to aforesaid embodiment shown in FIG. 4B. For example, if the camera unit 121 of the electronic device 120 comprises a depth camera, then the electronic device 120 can transmit to the electronic device 110 the feature points F3P3-F3P7 of the image F3 along with their depth information, which can be used to determine the distances between the feature points F3P3-F3P7 and the electronic device 120. Then the feature points F3P3-F3P7 can be converted into map points MP10-MP14 according to the determined distances, the 2D coordinates of the feature points F3P3-F3P7 and the corresponding pose of the electronic device 120 estimated in step S660 or received from the electronic device 120 in step S654. In another example, the feature points F3P3-F3P7 (including descriptors, 2D coordinates, timestamps, etc.) can be stored into the three-dimensional map GM along with the corresponding pose of the electronic device 120 estimated in step S660 or received from the electronic device 120 in step S654, and wait to be converted into the map points MP10-MP14 later. More specifically, if later on the electronic device 110 obtains a feature point F5P1 in an image F5 (not shown in figures) matching one of the feature points (e.g. F3P3) and the corresponding pose of the electronic device 110 or 120 (depending on which device capturing the image F5), then the feature points F3P3 can be converted into the map point MP10 according to the feature points F3P3 and F5P1 and their corresponding poses. The conversion method is well known and will not be detailed here.

## Claims

1. A tracking system, comprising:
a first electronic device (110) located in an unknown physical environment, the first electronic device (110) being a head mounted
device and comprising:
- a first camera unit (111) configured for capturing a plurality of first images of the unknown physical environment;
- **characterized by** a first processor (112), coupled to the first camera unit (111) and configured for extracting a plurality of first feature points from the first images, generating a plurality of map points according to the extracted first feature points, building a three-dimensional, 3D, map of the unknown physical environment according to the map points, and obtaining the distances (d1, d2, d3, d4, d5) between the first camera unit (111) and objects in the unknown physical environment represented by the plurality of first feature points of the plurality of map points by a depth camera included in the first camera unit (111), or calculating the distances (d1, d2, d3, d4, d5) between the first camera unit (111) and the objects in the unknown physical environment represented by the plurality of first feature points of the plurality of map points by disparity based on displacement of the first camera unit (111) at different time points, the distances (d1, d2, d3, d4, d5) being calculated by the disparity between two images each captured by the camera unit (111), the first image of the two images captured at a time point, and the second image of the two images captured at another later time point when the camera unit (111) is displaced to another position; and
- a first communication unit (113) coupled to the first processor (112); and
a second electronic device (120) located in the unknown physical environment, the second electronic device (120) being a controller, a smart phone, or a head mounted device, and comprising:
- a second camera unit (121) configured for capturing a second image of the unknown physical environment;
- a second processor (122) coupled to the second camera unit (121) and configured for extracting a plurality of second feature points from the second image;
wherein the second processor (122) of the second electronic device (120) being equipped with less computation resource than the first processor (112) of the electronic device (110);
- a second communication unit (123) coupled to the second processor (122) and configured for transmitting the second feature points to the first electronic device (110);
wherein the first communication unit (113) is configured for receiving the second feature points, and the first processor (112) is further configured for estimating a pose of the second electronic device (120) according to the 3D map and the received second feature points;
wherein the pose of the second electronic device (120) comprises at least one of a position of the second electronic device (120) in the 3D map and an orientation of the second electronic device (120) in the 3D map.

2. The tracking system of claim 1, wherein the first communication unit (113) transmits the estimated pose of the second electronic device (120) to the second electronic device (120).

3. The tracking system of claim 1, wherein the first processor (112) estimates the pose of the second electronic device (120) when an amount of the second feature points which match the map points is larger than a threshold.

4. The tracking system of claim 3, wherein the first processor (112) estimates the pose of the second electronic device (120) according to the map points which are matched to the second feature points.

5. The tracking system of claim 3, wherein each of the map points comprises a first descriptor which indicates at least one feature of the corresponding map point, and each of the second feature points comprises a second descriptor which indicates at least one feature of the corresponding second feature point, wherein the first processor (112) is configured to determine whether there is a match between the second feature point and the map point according to the first and second descriptors.

6. The tracking system of claim 5, wherein the second feature point further comprises a timestamp corresponding to the second descriptor, and the first processor (112) updates the 3D map by adding to a first map point of the map points the descriptor and the timestamp of the second feature point which matches the first map point.

7. The tracking system of claim 1, wherein the first electronic device (110) transmits to the second electronic device (120) an indicator indicating a failure to estimate the pose of the second electronic device (120), when an amount of the second feature points which match the map points is not larger than a threshold.

8. The tracking system of claim 7, wherein the second electronic device (120) further comprises an inertial measurement unit, IMU, for generating inertial measurement data, and the second processor (122) is configured for estimating the pose of the second electronic device (120) according to the inertial measurement data in response to receiving the indicator.

9. The tracking system of claim 8, wherein the second electronic device (120) transmits the estimated position of the second electronic device (120) to the first electronic device (110).

10. The tracking system of claim 9, wherein the first processor (112) updates the 3D map by adding the received estimated pose of the second electronic device (120) and the second feature point which do not match any of the map points to the 3D map.

11. A tracking method, comprising:
capturing a plurality of first images of an unknown physical environment by a first electronic device (110), the first electronic device (110) being a head mounted device;
**characterized by** extracting a plurality of first feature points from the first images, generating a plurality of map points according to the extracted first feature points, building a three-dimensional, 3D, map of the unknown physical environment according to the map points by the first electronic device (110), and obtaining the distances (d1, d2, d3, d4, d5) between the first camera unit (111) and objects in the unknown physical environment represented by the plurality of first feature points of the plurality of map points by a depth camera included in the first camera unit (111), or calculating the distances (d1, d2, d3, d4, d5) between the first camera unit (111) and the objects in the unknown physical environment represented by the plurality of first feature points of the plurality of map points by disparity based on displacement of the first camera unit (111) at different time points, the distances (d1, d2, d3, d4, d5) being calculated by the disparity between two images each captured by the camera unit (111), the first image of the two images captured at a time point, and the second image of the two images captured at another later time point when the camera unit (111) is displaced to another position;
capturing a second image of the physical environment by a second electronic device (120), the second electronic device (120) being a controller, a smart phone, or a head mounted device;
extracting a plurality of second feature points from the second image and transmitting the second feature points to the first electronic device (110) by the second electronic device (120);
wherein the second processor (122) of the second electronic device (120) being equipped with less computation resource than the first processor (112) of the electronic device (110);
receiving the second feature points and estimating a pose of the second electronic device (120) according to the 3D map and the received second feature points by the first electronic device; and
wherein the pose of the second electronic device (120) comprises at least one of a position of the second electronic device in the 3D map and an orientation of the second electronic device (120) in the 3D map.

12. The tracking system of claim 1, wherein the first processor (112) is further configured for comparing the second feature points with the map points so as to determine whether there is a match there between and updating the 3D map according to the comparison result.

13. The tracking system of claim 12, wherein each of the map points comprises a first descriptor which indicates at least one feature of the corresponding map point, and each of the second feature points comprises a second descriptor which indicates at least one feature of the corresponding second feature point, wherein the first processor (112) is configured to determine whether there is a match between the second feature point and the map point according to the first and second descriptors.

14. The tracking system of claim 13, wherein the second feature point further comprises a timestamp corresponding to the second descriptor, and the first processor (112) updates the 3D map by adding to a first map point of the map points the descriptor and the timestamp of the second feature point which matches the first map point.

15. The tracking system of claim 12, wherein the first processor (112) estimates a pose of the second electronic device (120) according to the map points which are matched to the second feature points, and updates the 3D map by adding to the 3D map the estimated pose of the second electronic device (120) and the second feature point which do not match any of the map points.

## Patentansprüche

1. Ein Verfolgungssystem, das Folgendes beinhaltet:
eine erste elektronische Vorrichtung (110), die sich in einer unbekannten physischen Umgebung befindet, wobei die erste elektronische Vorrichtung (110) eine am Kopf montierte Vorrichtung ist und Folgendes beinhaltet:
- eine erste Kameraeinheit (111), die konfiguriert ist, um eine Vielzahl von ersten Bildern der unbekannten physischen Umgebung aufzunehmen;
- **dadurch gekennzeichnet, dass** ein erster Prozessor (112), der mit der ersten Kameraeinheit (111) gekoppelt und konfiguriert ist, um eine Vielzahl von ersten Merkmalspunkten aus den ersten Bildern zu extrahieren, eine Vielzahl von Kartenpunkten gemäß den extrahierten ersten Merkmalspunkten erzeugt, eine dreidimensionale Karte, 3D-Karte, der unbekannten physischen Umgebung gemäß den Kartenpunkten erstellt und die Entfernungen (d1, d2, d3, d4, d5) zwischen der ersten Kameraeinheit (111) und Objekten in der unbekannten physischen Umgebung, die durch die Vielzahl von ersten Merkmalspunkten der Vielzahl von Kartenpunkten dargestellt sind, durch eine in der ersten Kameraeinheit (111) umfasste Tiefenkamera erhält oder die Entfernungen (d1, d2, d3, d4, d5) zwischen der ersten Kameraeinheit (111) und den Objekten in der unbekannten physischen Umgebung, die durch die Vielzahl von ersten Merkmalspunkten der Vielzahl von Kartenpunkten dargestellt sind, durch Disparität, basierend auf einer Verschiebung der ersten Kameraeinheit (111) zu verschiedenen Zeitpunkten, berechnet, wobei die Entfernungen (d1, d2, d3, d4, d5) durch die Disparität zwischen zwei Bildern, die jeweils von der Kameraeinheit (111) aufgenommen wurden, berechnet werden, wobei das erste Bild der zwei Bilder zu einem Zeitpunkt aufgenommen wird und das zweite Bild der zwei Bilder zu einem anderen späteren Zeitpunkt aufgenommen wird, wenn die Kameraeinheit (111) in eine andere Position verschoben wird; und
- eine erste Kommunikationseinheit (113), die mit dem ersten Prozessor (112) gekoppelt ist; und
eine zweite elektronische Vorrichtung (120), die sich in der unbekannten physischen Umgebung befindet, wobei die zweite elektronische Vorrichtung (120) eine Steuerung, ein Smartphone oder eine am Kopf montierte Vorrichtung ist und Folgendes beinhaltet:
- eine zweite Kameraeinheit (121), die konfiguriert ist, um ein zweites Bild der unbekannten physischen Umgebung aufzunehmen;
- einen zweiten Prozessor (122), der mit der zweiten Kameraeinheit (121) gekoppelt und konfiguriert ist, um eine Vielzahl von zweiten Merkmalspunkten aus dem zweiten Bild zu extrahieren;
wobei der zweite Prozessor (122) der zweiten elektronischen Vorrichtung (120) mit weniger Rechenressourcen ausgestattet ist als der erste Prozessor (112) der elektronischen Vorrichtung (110);
- eine zweite Kommunikationseinheit (123), die mit dem zweiten Prozessor (122) gekoppelt und konfiguriert ist, um die zweiten Merkmalspunkte an die erste elektronische Vorrichtung (110) zu übertragen;
wobei die erste Kommunikationseinheit (113) konfiguriert ist, um die zweiten Merkmalspunkte zu empfangen, und der erste Prozessor (112) ferner konfiguriert ist, um eine Pose der zweiten elektronischen Vorrichtung (120) gemäß der 3D-Karte und den empfangenen zweiten Merkmalspunkten zu schätzen;
wobei die Pose der zweiten elektronischen Vorrichtung (120) mindestens eines von einer Position der zweiten elektronischen Vorrichtung (120) in der 3D-Karte und einer Ausrichtung der zweiten elektronischen Vorrichtung (120) in der 3D-Karte beinhaltet.

2. Verfolgungssystem gemäß Anspruch 1, wobei die erste Kommunikationseinheit (113) die geschätzte Pose der zweiten elektronischen Vorrichtung (120) an die zweite elektronische Vorrichtung (120) überträgt.

3. Verfolgungssystem gemäß Anspruch 1, wobei der erste Prozessor (112) die Pose der zweiten elektronischen Vorrichtung (120) schätzt, wenn eine Menge der zweiten Merkmalspunkte, die mit den Kartenpunkten übereinstimmen, größer als ein Schwellenwert ist.

4. Verfolgungssystem gemäß Anspruch 3, wobei der erste Prozessor (112) die Pose der zweiten elektronischen Vorrichtung (120) gemäß den Kartenpunkten schätzt, die mit den zweiten Merkmalspunkten übereinstimmen.

5. Verfolgungssystem gemäß Anspruch 3, wobei jeder der Kartenpunkte einen ersten Deskriptor beinhaltet, der mindestens ein Merkmal des entsprechenden Kartenpunkts anzeigt, und jeder der zweiten Merkmalspunkte einen zweiten Deskriptor beinhaltet, der mindestens ein Merkmal des entsprechenden zweiten Merkmalspunkts anzeigt, wobei der erste Prozessor (112) konfiguriert ist, um zu bestimmen, ob es eine Übereinstimmung zwischen dem zweiten Merkmalspunkt und dem Kartenpunkt gemäß dem ersten und zweiten Deskriptor gibt.

6. Verfolgungssystem gemäß Anspruch 5, wobei der zweite Merkmalspunkt ferner einen Zeitstempel beinhaltet, der dem zweiten Deskriptor entspricht, und der erste Prozessor (112) die 3D-Karte aktualisiert, indem er den Deskriptor und den Zeitstempel des zweiten Merkmalpunkts, der mit dem ersten Kartenpunkt übereinstimmt, zu einem ersten Kartenpunkt der Kartenpunkte hinzufügt.

7. Verfolgungssystem gemäß Anspruch 1, wobei die erste elektronische Vorrichtung (110) einen Anzeiger an die zweite elektronische Vorrichtung (120) überträgt, der ein Fehlschlagen des Schätzens der Pose der zweiten elektronischen Vorrichtung (120) anzeigt, wenn eine Menge der zweiten Merkmalspunkte, die mit den Kartenpunkten übereinstimmen, nicht größer als ein Schwellenwert ist.

8. Verfolgungssystem gemäß Anspruch 7, wobei die zweite elektronische Vorrichtung (120) ferner eine Inertialmessungseinheit, IMU, zum Erzeugen von Inertialmessdaten beinhaltet und der zweite Prozessor (122) konfiguriert ist, um als Reaktion auf den Empfang des Anzeigers die Pose der zweiten elektronischen Vorrichtung (120) gemäß den Inertialmessdaten zu schätzen.

9. Verfolgungssystem gemäß Anspruch 8, wobei die zweite elektronische Vorrichtung (120) die geschätzte Position der zweiten elektronischen Vorrichtung (120) an die erste elektronische Vorrichtung (110) überträgt.

10. Verfolgungssystem gemäß Anspruch 9, wobei der erste Prozessor (112) die 3D-Karte aktualisiert, indem er die empfangene geschätzte Pose der zweiten elektronischen Vorrichtung (120) und den zweiten Merkmalspunkt, die mit keinem der Kartenpunkte übereinstimmen, zu der 3D-Karte hinzufügt.

11. Ein Verfolgungsverfahren, das Folgendes beinhaltet:
Aufnehmen einer Vielzahl von ersten Bildern einer unbekannten physischen Umgebung durch eine erste elektronische Vorrichtung (110), wobei die erste elektronische Vorrichtung (110) eine am Kopf montierte Vorrichtung ist;
**gekennzeichnet durch** das Extrahieren einer Vielzahl von ersten Merkmalspunkten aus den ersten Bildern, das Erzeugen einer Vielzahl von Kartenpunkten gemäß den extrahierten ersten Merkmalspunkten, das Erstellen einer dreidimensionalen Karte, 3D-Karte, der unbekannten physischen Umgebung gemäß den Kartenpunkten durch die erste elektronische Vorrichtung (110) und das Erhalten der Entfernungen (d1, d2, d3, d4, d5) zwischen der ersten Kameraeinheit (111) und Objekten in der unbekannten physischen Umgebung, dargestellt durch die Vielzahl von ersten Merkmalspunkten der Vielzahl von Kartenpunkten, durch eine in der ersten Kameraeinheit (111) umfasste Tiefenkamera oder das Berechnen der Entfernungen (d1, d2, d3, d4, d5) zwischen der ersten Kameraeinheit (111) und den Objekten in der unbekannten physischen Umgebung, dargestellt durch die Vielzahl von ersten Merkmalspunkten der Vielzahl von Kartenpunkten, durch Disparität, basierend auf einer Verschiebung der ersten Kameraeinheit (111) zu verschiedenen Zeitpunkten, wobei die Entfernungen (d1, d2, d3, d4, d5) durch die Disparität zwischen zwei Bildern, jeweils aufgenommen von der Kameraeinheit (111), berechnet werden, wobei das erste Bild der zwei Bilder zu einem Zeitpunkt aufgenommen wird und das zweite Bild der zwei Bilder zu einem anderen späteren Zeitpunkt aufgenommen wird, wenn die Kameraeinheit (111) an eine andere Position verschoben wird;
Aufnehmen eines zweiten Bildes der physischen Umgebung durch eine zweite elektronische Vorrichtung (120), wobei die zweite elektronische Vorrichtung (120) eine Steuerung, ein Smartphone oder eine am Kopf montierte Vorrichtung ist;
Extrahieren einer Vielzahl von zweiten Merkmalspunkten aus dem zweiten Bild und Übertragen der zweiten Merkmalspunkte an die erste elektronische Vorrichtung (110) durch die zweite elektronische Vorrichtung (120);
wobei der zweite Prozessor (122) der zweiten elektronischen Vorrichtung (120) mit weniger Rechenressourcen ausgestattet ist als der erste Prozessor (112) der elektronischen Vorrichtung (110);
Empfangen der zweiten Merkmalspunkte und Schätzen einer Pose der zweiten elektronischen Vorrichtung (120) gemäß der 3D-Karte und den empfangenen zweiten Merkmalspunkten durch die erste elektronische Vorrichtung; und
wobei die Pose der zweiten elektronischen Vorrichtung (120) mindestens eines von einer Position der zweiten elektronischen Vorrichtung in der 3D-Karte und einer Ausrichtung der zweiten elektronischen Vorrichtung (120) in der 3D-Karte beinhaltet.

12. Verfolgungssystem gemäß Anspruch 1, wobei der erste Prozessor (112) ferner konfiguriert ist, um die zweiten Merkmalspunkte mit den Kartenpunkten zu vergleichen, um zu bestimmen, ob eine Übereinstimmung zwischen ihnen besteht, und die 3D-Karte gemäß dem Vergleichsergebnis zu aktualisieren.

13. Verfolgungssystem gemäß Anspruch 12, wobei jeder der Kartenpunkte einen ersten Deskriptor beinhaltet, der mindestens ein Merkmal des entsprechenden Kartenpunkts anzeigt, und jeder der zweiten Merkmalspunkte einen zweiten Deskriptor beinhaltet, der mindestens ein Merkmal des entsprechenden zweiten Merkmalspunkts anzeigt, wobei der erste Prozessor (112) konfiguriert ist, um zu bestimmen, ob es eine Übereinstimmung zwischen dem zweiten Merkmalspunkt und dem Kartenpunkt gemäß dem ersten und zweiten Deskriptor gibt.

14. Verfolgungssystem gemäß Anspruch 13, wobei der zweite Merkmalspunkt ferner einen Zeitstempel beinhaltet, der dem zweiten Deskriptor entspricht, und der erste Prozessor (112) die 3D-Karte aktualisiert, indem er den Deskriptor und den Zeitstempel des zweiten Merkmalpunkts, der mit dem ersten Kartenpunkt übereinstimmt, zu einem ersten Kartenpunkt der Kartenpunkte hinzufügt.

15. Verfolgungssystem gemäß Anspruch 12, wobei der erste Prozessor (112) eine Pose der zweiten elektronischen Vorrichtung (120) gemäß den Kartenpunkten schätzt, die mit den zweiten Merkmalspunkten übereinstimmen, und die 3D-Karte aktualisiert, indem er die geschätzte Pose der zweiten elektronischen Vorrichtung (120) und den zweiten Merkmalspunkt, die mit keinem der Kartenpunkte übereinstimmen, zu der 3D-Karte hinzufügt.

## Revendications

1. Un système de suivi, comprenant :
un premier dispositif électronique (110) situé dans un environnement physique inconnu, le premier dispositif électronique (110) étant un visiocasque et comprenant :
- une première unité de caméra (111) configurée pour la capture d'une pluralité de premières images de l'environnement physique inconnu ;
- **caractérisé par** un premier processeur (112), couplé à la première unité de caméra (111) et configuré pour l'extraction d'une pluralité de premiers points caractéristiques à partir des premières images, la génération d'une pluralité de points de carte d'après les premiers points caractéristiques extraits, la construction d'une carte tridimensionnelle, 3D, de l'environnement physique inconnu d'après les points de carte, et l'obtention des distances (d1, d2, d3, d4, d5) entre la première unité de caméra (111) et des objets dans l'environnement physique inconnu représentés par la pluralité de premiers points caractéristiques de la pluralité de points de carte par une caméra de profondeur incluse dans la première unité de caméra (111), ou le calcul des distances (d1, d2, d3, d4, d5) entre la première unité de caméra (111) et les objets dans l'environnement physique inconnu représentés par la pluralité de premiers points caractéristiques de la pluralité de points de carte par disparité sur la base du déplacement de la première unité de caméra (111) à différents points temporels, les distances (d1, d2, d3, d4, d5) étant calculées par la disparité entre deux images capturées chacune par l'unité de caméra (111), la première image des deux images étant capturée à un point temporel, et la deuxième image des deux images étant capturée à un autre point temporel ultérieur lorsque l'unité de caméra (111) a été déplacée jusqu'à une autre position ; et
- une première unité de communication (113) couplée au premier processeur (112) ; et
un deuxième dispositif électronique (120) situé dans l'environnement physique inconnu, le deuxième dispositif électronique (120) étant un organe de commande, un téléphone intelligent, ou un visiocasque, et comprenant :
- une deuxième unité de caméra (121) configurée pour la capture d'une deuxième image de l'environnement physique inconnu ;
- un deuxième processeur (122) couplé à la deuxième unité de caméra (121) et configuré pour l'extraction d'une pluralité de deuxièmes points caractéristiques à partir de la deuxième image ;
le deuxième processeur (122) du deuxième dispositif électronique (120) étant équipé de moins de ressources de calcul que le premier processeur (112) du dispositif électronique (110) ;
- une deuxième unité de communication (123) couplée au deuxième processeur (122) et configurée pour la transmission des deuxièmes points caractéristiques au premier dispositif électronique (110) ;
dans lequel la première unité de communication (113) est configurée pour la réception des deuxièmes points caractéristiques, et le premier processeur (112) est en outre configuré pour l'estimation d'une pose du deuxième dispositif électronique (120) d'après la carte 3D et les deuxièmes points caractéristiques reçus ;
dans lequel la pose du deuxième dispositif électronique (120) comprend au moins soit une position du deuxième dispositif électronique (120) dans la carte 3D soit une orientation du deuxième dispositif électronique (120) dans la carte 3D.

2. Le système de suivi de la revendication 1, dans lequel la première unité de communication (113) transmet la pose estimée du deuxième dispositif électronique (120) au deuxième dispositif électronique (120).

3. Le système de suivi de la revendication 1, dans lequel le premier processeur (112) estime la pose du deuxième dispositif électronique (120) lorsqu'une quantité des deuxièmes points caractéristiques qui coïncident avec les points de carte est supérieure à un seuil.

4. Le système de suivi de la revendication 3, dans lequel le premier processeur (112) estime la pose du deuxième dispositif électronique (120) d'après les points de carte qui sont mis en coïncidence avec les deuxièmes points caractéristiques.

5. Le système de suivi de la revendication 3, dans lequel chacun des points de carte comprend un premier descripteur qui indique au moins une caractéristique du point de carte correspondant, et chacun des deuxièmes points caractéristiques comprend un deuxième descripteur qui indique au moins une caractéristique du deuxième point caractéristique correspondant, dans lequel le premier processeur (112) est configuré pour déterminer s'il existe une coïncidence entre le deuxième point caractéristique et le point de carte d'après les premiers et deuxièmes descripteurs.

6. Le système de suivi de la revendication 5, dans lequel le deuxième point caractéristique comprend en outre une estampille temporelle correspondant au deuxième descripteur, et le premier processeur (112) met à jour la carte 3D en ajoutant à un premier point de carte des points de carte le descripteur et l'estampille temporelle du deuxième point caractéristique qui coïncide avec le premier point de carte.

7. Le système de suivi de la revendication 1, dans lequel le premier dispositif électronique (110) transmet au deuxième dispositif électronique (120) un indicateur indiquant un échec à estimer la pose du deuxième dispositif électronique (120), lorsqu'une quantité des deuxièmes points caractéristiques qui coïncident avec les points de carte n'est pas supérieure à un seuil.

8. Le système de suivi de la revendication 7, dans lequel le deuxième dispositif électronique (120) comprend en outre une unité de mesure inertielle, IMU, pour la génération de données de mesure inertielle, et le deuxième processeur (122) est configuré pour l'estimation de la pose du deuxième dispositif électronique (120) d'après les données de mesure inertielle en réponse à la réception de l'indicateur.

9. Le système de suivi de la revendication 8, dans lequel le deuxième dispositif électronique (120) transmet la position estimée du deuxième dispositif électronique (120) au premier dispositif électronique (110).

10. Le système de suivi de la revendication 9, dans lequel le premier processeur (112) met à jour la carte 3D en ajoutant la pose estimée reçue du deuxième dispositif électronique (120) et le deuxième point caractéristique qui ne coïncident avec aucun des points de carte à la carte 3D.

11. Un procédé de suivi, comprenant :
la capture d'une pluralité de premières images d'un environnement physique inconnu par un premier dispositif électronique (110), le premier dispositif électronique (110) étant un visiocasque ;
**caractérisé par** l'extraction d'une pluralité de premiers points caractéristiques à partir des premières images, la génération d'une pluralité de points de carte d'après les premiers points caractéristiques extraits, la construction d'une carte tridimensionnelle, 3D, de l'environnement physique inconnu d'après les points de carte par le premier dispositif électronique (110), et l'obtention des distances (d1, d2, d3, d4, d5) entre la première unité de caméra (111) et des objets dans l'environnement physique inconnu représentés par la pluralité de premiers points caractéristiques de la pluralité de points de carte par une caméra de profondeur incluse dans la première unité de caméra (111), ou le calcul des distances (d1, d2, d3, d4, d5) entre la première unité de caméra (111) et les objets dans l'environnement physique inconnu représentés par la pluralité de premiers points caractéristiques de la pluralité de points de carte par disparité sur la base du déplacement de la première unité de caméra (111) à différents points temporels, les distances (d1, d2, d3, d4, d5) étant calculées par la disparité entre deux images capturées chacune par l'unité de caméra (111), la première image des deux images étant capturée à un point temporel, et la deuxième image des deux images étant capturée à un autre point temporel ultérieur lorsque l'unité de caméra (111) a été déplacée jusqu'à une autre position ;
la capture d'une deuxième image de l'environnement physique par un deuxième dispositif électronique (120), le deuxième dispositif électronique (120) étant un organe de commande, un téléphone intelligent, ou un visiocasque ;
l'extraction d'une pluralité de deuxièmes points caractéristiques à partir de la deuxième image et la transmission des deuxièmes points caractéristiques au premier dispositif électronique (110) par le deuxième dispositif électronique (120) ;
dans lequel le deuxième processeur (122) du deuxième dispositif électronique (120) est équipé de moins de ressources de calcul que le premier processeur (112) du dispositif électronique (110) ;
la réception de deuxièmes points caractéristiques et l'estimation d'une pose du deuxième dispositif électronique (120) d'après la carte 3D et les deuxièmes points caractéristiques reçus par le premier dispositif électronique ; et
dans lequel la pose du deuxième dispositif électronique (120) comprend au moins soit une position du deuxième dispositif électronique dans la carte 3D soit une orientation du deuxième dispositif électronique (120) dans la carte 3D.

12. Le système de suivi de la revendication 1, dans lequel le premier processeur (112) est en outre configuré pour la comparaison des deuxièmes points caractéristiques avec les points de carte de sorte à déterminer s'il existe une coïncidence entre ceux-ci et pour la mise à jour de la carte 3D d'après le résultat de la comparaison.

13. Le système de suivi de la revendication 12, dans lequel chacun des points de carte comprend un premier descripteur qui indique au moins une caractéristique du point de carte correspondant, et chacun des deuxièmes points caractéristiques comprend un deuxième descripteur qui indique au moins une caractéristique du deuxième point caractéristique correspondant, dans lequel le premier processeur (112) est configuré pour déterminer s'il existe une coïncidence entre le deuxième point caractéristique et le point de carte d'après les premier et deuxième descripteurs.

14. Le système de suivi de la revendication 13, dans lequel le deuxième point caractéristique comprend en outre une estampille temporelle correspondant au deuxième descripteur, et le premier processeur (112) met à jour la carte 3D en ajoutant à un premier point de carte des points de carte le descripteur et l'estampille temporelle du deuxième point caractéristique qui coïncide avec le premier point de carte.

15. Le système de suivi de la revendication 12, dans lequel le premier processeur (112) estime une pose du deuxième dispositif électronique (120) d'après les points de carte qui sont mis en coïncidence avec les deuxièmes points caractéristiques, et met à jour la carte 3D en ajoutant à la carte 3D la pose estimée du deuxième dispositif électronique (120) et le deuxième point caractéristique qui ne coïncident avec aucun des points de carte.
